# EUROPÄISCHE PATENTSCHRIFT

(11) **EP 3 132 725 B1**
(45) Veröffentlichungstag und Bekanntmachung des Hinweises auf die Patenterteilung: **28.08.2019**
(21) Anmeldenummer: 16174316.6
(22) Anmeldetag: 14.06.2016
(51) Int. Cl.: A47J 31/46, A47J 31/06

(54) **GETRÄNKEZUBEREITUNGSVORRICHTUNG SOWIE BETRIEBSVERFAHREN**
BEVERAGE PREPARATION DEVICE AND METHOD OF OPERATION
DISPOSITIF DE PRÉPARATION DE BOISSONS ET PROCÉDÉ DE FONCTIONNEMENT

(30) Priorität: 18.08.2015 DE 102015113671
(43) Veröffentlichungstag der Anmeldung: 22.02.2017
(73) Patentinhaber: Eugster/Frismag AG, 8580 Amriswil (CH)
(72) Erfinder: Schellenberg, Anita, 9320 Arbon (CH); Fischer, Daniel, 8590 Romanshorn (CH)
(74) Vertreter: Patentanwälte Behrmann Wagner PartG mbB

(56) Entgegenhaltungen:
- EP-A2- 1 440 640
- EP-A2- 1 486 150
- DE-A1-102009 052 513
- GB-A- 2 475 290

## Beschreibung

Die Erfindung betrifft eine Getränkezubereitungsvorrichtung gemäß Anspruch 1 zum Zubereiten von Getränken, insbesondere Kaltgetränken, mittels Getränkesubstratverpackungen, bevorzugt Substratkapseln, umfassend eine Injektionskammer zum Injizieren einer Flüssigkeit, insbesondere einer mittels integralen Kühlmitteln der Getränkezubereitungsvorrichtung gekühlten Flüssigkeit und/oder einer mittels integralen Heizmitteln der Getränkezubereitungsvorrichtung erhitzter Flüssigkeit, insbesondere Wasser, in eine in der Injektionskammer befindliche Getränkesubstratverpackung, weiter umfassend Fördermittel zum Fördern der Flüssigkeit zu der Injektionskammer, wobei die Injektionskammer von einem, insbesondere mehrteiligen, Gehäuse begrenzt ist und ein durch Injizieren der Flüssigkeit in die Getränkesubstratverpackung erhaltenes und durch eine Getränksubstratverpackungsöffnung in die Injektionskammer ausströmendes Getränk durch einen Auslasskanal aus der Injektionskammer, insbesondere in ein Trinkgefäß oder zur weiteren Verarbeitung in der Getränkezubereitungsvorrichtung ausleitbar ist. Durch Injizieren von Flüssigkeit in die Getränkesubstratverpackung kann darin befindliches Getränkesubstrat in der Flüssigkeit gelöst und/oder ausgelaugt werden, so dass Farb- und/oder Aromastoffe aus dem Substrat in die Flüssigkeit übergehen, insbesondere im Rahmen der Kaffee- oder Teezubereitung. Ferner betrifft die Erfindung ein Verfahren zum Betreiben einer solchen Getränkezubereitungsvorrichtung gemäß Anspruch 10.

Bei bekannten Kapselmaschinen zum Herstellen von Getränken besteht das Problem, dass der einteilig mit dem Injektionskammergehäuse ausgebildete Auslass aufgrund der beschränkten Zugänglichkeit nur schlecht reinigbar ist. In der Regel ist ein mechanisches Reinigen bei Verschmutzung und/oder Verstopfung des Auslasses nicht üblich.

Insbesondere bei der Herstellung von Kaltgetränken besteht das zusätzliche Problem, dass der Auslasskanal nicht regelmäßig von heißer Flüssigkeit durchströmt wird, was zu einer erhöhten Keimbelastung und/oder zu stärkeren Ablagerungen von Getränkesubstratbestandteilen und/oder -inhaltsstoffen führen kann.

Aus der DE 2009 052 513 A1 ist eine Getränkezubereitungsvorrichtung zum Herstellen von Kaltgetränken bekannt, welche ein einen Auslasskanal aufweisendes Auslassbauteil umfasst, das mittels Fixiermitteln an der Getränkezubereitungsvorrichtung lösbar angeordnet ist. Zum Lösen des Auslassbauteils sind an der Außenseite des Auslassbauteils blättchenförmige Griffmittel vorgesehen, die es ermöglichen, dass Auslassbauteil von der Kapselmaschine durch Aufbringen eines Drehmoments entlang einer Drehachse zu trennen. An dem Auslassbauteil ist lösbar ein Endstück angeordnet, das axial versetzt zu den blättchenförmigen Axialfortsätzen der Griffmittel einen senkrecht zur Drehachse angeordneten Endabschnitt des Auslasskanals bildet. Für eine vollständige Reinigung muss das Endstück von dem Auslassbauteil getrennt werden. Nachteilig sind die eigens als Griffabschnitte der Griffmittel vorgesehenen Axialfortsätze, so wie der mehrteilige Aufbau, weshalb eine gründliche Reinigung das Zerlegen von Auslassbauteil und Endstück erfordert.

Ausgehend von dem vorgenannten Stand der Technik liegt der Erfindung die Aufgabe zugrunde, eine vereinfacht reinigbarere Getränkezubereitungsvorrichtung anzugeben, bei der Verschmutzungen und/oder Verstopfungen des Auslasskanals der Getränkezubereitungsvorrichtung zuverlässig und einfach beseitigt werden können. Ferner besteht die Aufgabe darin, ein Verfahren zum Betreiben einer solchen Getränkezubereitungsvorrichtung anzugeben.

Diese Aufgabe wird hinsichtlich der Getränkezubereitungsvorrichtung mit den Merkmalen des Anspruchs 1 gelöst.

Hinsichtlich des Betriebsverfahrens wird die Aufgabe mit den Merkmalen des Anspruchs 10 gelöst.

Vorteilhafte Weiterbildungen der Erfindung sind in den Unteransprüchen angegeben.

Der Erfindung liegt der Gedanke zugrunde, einen zur Verarbeitung einer Vielzahl von Getränkesubstratverpackungen ausgebildeten, d.h. getränkezubereitungsvorrichtungsseitigen, bevorzugt zumindest abschnittsweise rohrförmigen, Auslass nicht mehr einteilig mit dem Injektionskammergehäuse auszubilden, sondern den Auslasskanal an einem Auslassbauteil auszubilden bzw. anzuordnen und diesem Fixiermittel zuzuordnen, mithilfe derer das Auslassbauteil, insbesondere manuell, lösbar ortsfest relativ zu dem Gehäuse, insbesondere durch unmittelbare Wechselwirkung mit dem Gehäuse der Injektionskammer fixierbar ist. Anders ausgedrückt ist der Auslasskanal bzw. das den Auslasskanal aufweisende Auslassbauteil nach Lösen der Fixiermittel von dem, bevorzugt zumindest abschnittsweise in einem Getränkesubstratvorrichtungsgehäuse angeordneten, Injektionskammergehäuse abnehmbar und kann im abgenommenen Zustand aufgrund der deutlich verbesserten Zugänglichkeit einfach gereinigt werden. Bei dem Auslassbauteil handelt es sich bevorzugt um ein nach der Reinigung wiederverwendbares Bauteil - denkbar ist auch eine Ausgestaltung des Auslassbauteils als Wegwerfteil, welches nach erfolgtem Ausbau durch ein baugleiches, unbenutztes, beispielsweise steril verpacktes Auslassbauteil ersetzt werden kann.

Die erfindungsgemäße Getränkezubereitungsvorrichtung ist, wie eingangs erwähnt, bevorzugt zur Herstellung von Kaltgetränken ausgebildet, da sich hier der zusätzliche Vorteil der Senkung einer bakteriellen Belastung ergibt. Für den Fall der Ausbildung der Getränkezubereitungsvorrichtung zur Herstellung von Kaltgetränken weist die Getränkezubereitungsvorrichtung bevorzugt Kühlmittel auf, um die Flüssigkeit vor der Injektion in die Getränkezubereitungsvorrichtung und/oder des Getränks nach und/oder während des Durchströmens der Getränkesubstratverpackung, insbesondere nach dem Verlassen der Injektionskammer durch den Auslass kühlbar ist. Hierauf ist die Erfindung jedoch nicht beschränkt. Die Getränkezubereitungsvorrichtung kann zusätzlich oder alternativ auch zur Herstellung von Heißgetränken ausgebildet sein, wobei die Getränkezubereitungsvorrichtung im letztgenannten Fall bevorzugt Heizmittel aufweist zum Aufheizen der der Injektionskammer zugeleiteten Flüssigkeit und/oder des Getränks nach Durchströmen der Getränkesubstratverpackung.

Ganz besonders bevorzugt ist es nun, wenn das Auslassbauteil und die Fixiermittel derart ausgebildet sind, dass das Auslassbauteil von außen her an dem Gehäuse der Injektionskammer und/oder einem benachbart zur Injektionskammer angeordneten Bauteil lösbar fixierbar ist. Bevorzugt stützt sich das Auslassbauteil im mittels der Fixiermittel fixierten Zustand von außen an dem Injektionskammergehäuse oder einem injektionskammerfesten Bauteil ab und wird mithilfe der Fixiermittel von außen in Richtung Injektionskammergehäuse oder injektionskammergehäusefestem Bauteil fixierkraftbeaufschlagt.

Auch im Hinblick auf die konkrete Ausgestaltung des Gehäuses der Injektionskammer gibt es unterschiedliche Möglichkeiten. Bevorzugt handelt es sich um ein mehrteiliges Gehäuse, weiter bevorzugt um ein Gehäuse mit einem stationären Gehäuseteil und einem dazu manuell und/oder automatisch, insbesondere elektromotorisch verstellbarem Gehäuseteil zum Schließen der Injektionskammer nach dem Einführen einer Getränkesubstratverpackung. Wie später noch erläutert werden wird ist es besonders bevorzugt, wenn das Auslassbauteil von außen her an einem, insbesondere stationären (alternativ an einem manuell oder motorisch verstellbaren), insbesondere wannenförmigen Gehäuseteil formschlüssig festlegbar ist, insbesondere durch eine Drehbewegung, noch weiter bevorzugt durch eine kombinierte Steck-Drehbewegung. Besonders bevorzugt ist es, wenn an dem zusätzlich zu dem Gehäuseteil, an dem das Auslassbauteil lösbar fixierbar ist, vorgesehenen Gehäuseteil Öffnungsmittel zum Öffnen der Getränkesubstratverpackung auf einer Einlassseite der Getränkesubstratverpackung zugeordnet sind, um über die mindestens eine so in der Getränkesubstratverpackung hergestellte Öffnung Flüssigkeit, insbesondere Wasser in die Getränkesubstratverpackung einleiten zu können. Ganz besonders bevorzugt ist es, wenn, wie später noch erläutert werden wird, zusätzlich zu den einlassseitigen Öffnungsmittel auslassseitige Öffnungsmittel zum Herstellen mindestens einer Auslassöffnung in der Getränkesubstratverpackung als Bestandteil der Getränkezubereitungsvorrichtung vorgesehen sind.

Wie eingangs bereits angedeutet, müssen die Fixiermittel nicht zur unmittelbaren Wechselwirkung mit dem Gehäuse der Injektionskammer ausgebildet sein - wesentlich ist für den grundlegenden Gedanken zunächst, dass das Auslassbauteil mit Hilfe der Fixiermittel fest relativ zu dem Gehäuse positionierbar ist, was auch durch, insbesondere formschlüssige, Wechselwirkung mit einem an dem Gehäuse der Injektionskammer festgelegten Bauteil der Getränkesubstratvorrichtung realisierbar ist. Besonders bevorzugt ist jedoch eine Ausführungsform, bei der das Auslassbauteil mithilfe der Fixiermittel durch unmittelbare Wechselwirkung der Fixiermittel mit dem Injektionskammergehäuse an diesem festlegbar ist, insbesondere durch formschlüssige und/oder reibschlüssige und/oder klemmende Fixierkraftbeaufschlagung. Wie später noch erläutert werden wird ist es besonders bevorzugt, wenn die Fixiermittel als Gewindeverbindung oder noch weiter bevorzugt als Bajonettverschluss ausgebildet sind, dass also im letztgenannten Fall das Auslassbauteil durch eine kombinierte Steck-Drehbewegung (entlang und um eine Fixiermitteldrehachse) an dem Gehäuse der Injektionskammer festlegbar ist.

Besonders bevorzugt ist es, wenn die Getränkezubereitungsvorrichtung zum Verarbeiten von Getränkesubstratkapseln ausgebildet ist. Unter einer Kapsel wird dabei eine Substratverpackung verstanden, die bevorzugt becherförmig ausgestaltet ist und die eine im Vergleich zu reinen Folienverpackungen verstärkte Umfangswand beispielsweise aus Kunststoff oder Aluminium sowie bevorzugt einen verstärkten Boden aufweist, wobei es besonders zweckmäßig ist, wenn die Getränkesubstratverpackung mit einer Deckelfolie verschlossen, insbesondere versiegelt ist. Insgesamt handelt es sich bei den zur Anwendung kommenden Getränkesubstratverpackungen bevorzugt um Einzel- oder Doppelportionsverpackungen zur Herstellung eines zur gleichzeitigen Herstellung eines einzigen oder alternativ von zwei Getränken. Alternativ zur Ausbildung der Getränkesubstratvorrichtung zur Verarbeitung von Getränkesubstratkapseln ist es denkbar, die Getränkezubereitungsvorrichtung zur Verarbeitung nicht kapselförmiger Getränkesubstratverpackungen, insbesondere Einzel- oder Doppelverpackungen auszubilden, insbesondere in der Art von sogenannten Pads oder aufstechbaren Folienverpackungen, die im Gegensatz zu Getränkesubstratverpackungen eine flexiblere Hülle aufweisen.

Im Hinblick auf die konkrete Ausgestaltung der Fixiermittel gibt es unterschiedliche Möglichkeiten. Besonders zweckmäßig ist es, die Fixiermittel mehrteilig auszubilden, derart, dass diese ein auslassbauteilseitiges erstes Fixierelement, insbesondere Formschlusselement aufweisen sowie ein weiteres, insbesondere injektionskammergehäuseseitiges, zweites Fixierelement, insbesondere Gegenformschlusselement zur fixierenden, insbesondere formschlüssigen Wechselwirkung mit dem ersten Fixierelement. Bei dem ersten Fixierelement kann es sich beispielsweise um ein Bajonettelement handeln, das mit einem als Gegenbajonettelement ausgebildeten zweiten Fixierelement einen Bajonettverschluss bildet, d.h. durch eine kombinierte Steck-Drehbewegung formschlüssig zusammenwirkt. Grundsätzlich ist es auch denkbar, dass das erste Fixierelement als Gewindeelement und das zweite Fixierelement als Gegengewindeelement ausgebildet ist, wobei Gewindeelement und Gegengewindeelement miteinander verschraubbar sind. Auch sind andere Ausgestaltungsvarianten zur, insbesondere fixierenden, beispielsweise reibschlüssigen, klemmenden oder verrastenden Wechselwirkung eines ersten und eines zweiten Fixierelementes realisierbar.

Als besonders vorteilhaft hat es sich herausgestellt, wenn die Fixiermittel derart ausgebildet sind, dass das Auslassbauteil durch eine Fixier-Drehbewegung des Auslassbauteils um eine Drehachse, bevorzugt nach einer vorhergehenden Steckbewegung entlang der Drehachse, translatorisch entlang der Drehachse in Richtung der Injektionskammer verstellbar ist. Anders ausgedrückt sind die Fixiermittel derart ausgestaltet, dass durch die Drehbewegung eine translatorische Verstellkraftkomponente erzeugt wird bzw. auf das Auslassbauteil bewirkt wird, so dass dieses insbesondere von außen her, näher zur Injektionskammer hin verstellbar ist bzw. verstellt wird. Dies kann insbesondere dadurch realisiert werden, dass die Fixiermittel mindestens eine Steigungsfläche aufweisen, die die Drehbewegung zumindest teilweise in eine translatorische Verstellbewegung entlang der Drehachse umwandelt.

Als besonders zweckmäßig hat es sich erwiesen, wenn das Auslassbauteil mit den Fixiermitteln in und/oder außerhalb einer, insbesondere umfangsgeschlossenen, Gehäuseöffnung des Injektorgehäuses, insbesondere eines wannenartigen Injektorgehäusebauteils lösbar fixierbar ist, wobei die freie Querschnittsfläche dieser Gehäuseöffnung größer ist als eine freie Querschnittsfläche des Auslasskanals, insbesondere an dessen engster Stelle.

Zur Gewährleistung eines dichten Zusammenwirkens zwischen dem Auslass und dem Injektionskammergehäuse oder einem injektionskammergehäusefesten Bauteil der Getränkezubereitungsvorrichtung ist eine, bevorzugt am Auslassbauteil, oder alternativ an dem Injektionskammergehäuse oder dem injektionskammergehäusefesten Bauteil festgelegte Dichtung, insbesondere Ringdichtung, ganz besonders bevorzugt als Elastomerdichtung ausgebildete Dichtung derart angeordnet, dass diese durch das Fixieren des Auslassbauteils axial und/oder radial pressbar ist. Besonders zweckmäßig ist es dabei, wenn die Dichtung mit dem Innenumfang und/oder einem Umfangsrand einer vorerwähnten Gehäuseöffnung des Injektionskammergehäuses dichtend zusammenwirkt. Grundsätzlich ist es auch denkbar, dass die Dichtung mit, insbesondere radialem Randabstand zu einer solchen Gehäuseöffnung mit dem Injektionskammergehäuse oder einem injektionskammergehäusefesten Bauteil zusammenwirkt. Bevorzugt liegt die Dichtung an der Außenseite des Injektionskammergehäuses oder des injektionskammergehäusefesten Bauteils und/oder in am Innenumfang der Gehäuseöffnung dichtend an.

Wie eingangs bereits angedeutet ist es besonders zweckmäßig, wenn der Injektionskammer Öffnungsmittel, insbesondere Aufstechmittel, zum auslassseitigen Öffnen, insbesondere Aufstechen der Getränkesubstratverpackung zugeordnet sind, insbesondere derart, dass durch die Schließbewegung der Injektionskammer eine Relativverstellbewegung zwischen den Öffnungsmitteln und der Getränkesubstratverpackung resultiert.

Besonders zweckmäßig ist es nun, wenn die bevorzugt als Aufstechmittel ausgebildeten Öffnungsmittel, insbesondere mindestens eine Aufstechnadel (Dorn) gemeinsam mit dem Auslasskanal von dem Injektionskammergehäuse lösbar sind. Dies kann in Weiterbildung der Erfindung dadurch erreicht werden, dass die Öffnungsmittel an dem Auslassbauteil angeordnet sind und auf diese Weise gemeinsam mit dem Auslassbauteil bzw. dessen Fixiermitteln lösbar ortsfest relativ zu dem Gehäuse der Injektionskammer arretierbar sind. Im Hinblick auf die konkrete Anordnung der Öffnungsmittel an dem Auslassbauteil gibt es unterschiedliche Möglichkeiten. Gemäß einer vergleichsweise konstruktiv einfachen Lösung kann vorgesehen werden, die Öffnungsmittel unverlierbar an dem Auslassbauteil anzuordnen, beispielsweise durch (teilweises) Umspritzen der von dem Auslassbauteil separaten, insbesondere aus einem von dem Auslassbauteilmaterial unterschiedlichen Material ausgebildeten Öffnungsmittel. Alternativ ist es denkbar, die Öffnungsmittel einteilig mit dem bevorzugt als Kunststoffspritzgussteil ausgebildeten Auslassbauteil auszubilden. Konstruktiv etwas aufwendiger ist eine bevorzugte Variante, wonach die Öffnungsmittel über Arretiermittel lösbar mit dem Auslassbauteil verbunden sind, insbesondere um die Öffnungsmittel austauschen und/oder separat von dem Auslassbauteil reinigen zu können. Besonders bevorzugt ist es, wenn insbesondere bei Realisierung einer lösbaren Verbindung zwischen Auslassbauteil und Öffnungsmittel eine Dichtung, insbesondere eine Elastomerdichtung angeordnet ist. Die Variante mit lösbar an dem Auslassbauteil fixierbaren Öffnungsmittel hat den zusätzlichen Vorteil, dass das Öffnungsmittelmaterial und das Auslassbauteilmaterial voneinander unterschiedlich ausgebildet sein können, beispielsweise derart, dass die Öffnungsmittel auf einfache Weise zumindest abschnittsweise aus Metall und das Auslassbauteil als Kunststoffbauteil, insbesondere als Kunststoffspritzgussteil ausgebildet ist. Sollten die Öffnungsmittel, insbesondere Aufstechmittel verschleißen, so ist aufgrund der lösbaren Anordnung der Öffnungsmittel an den Arretiermitteln eine einfache Austauschmöglichkeit gegeben.

Besonders zweckmäßig ist eine Ausgestaltungsvariante, bei der zwischen dem Außenumfang der Öffnungsmittel und dem Auslassbauteil mindestens ein Getränkekanal ausgebildet ist, aus dem das Getränk seitlich, insbesondere mit Abstand zu einem injektionskammerseitigen Auslasskanalende und einem davon abgewandten äußeren Auslasskanalende in den Auslasskanal strömen kann. Der Getränkekanal kann zumindest abschnittsweise durch eine am Außenumfang der Öffnungsmittel vorgesehene, sich vorzugsweise in Richtung der Längserstreckung der Öffnungsmittel erstreckende Nut gebildet sein, wobei bevorzugt mehrere solcher in Umfangsrichtung nebeneinander angeordnete Nuten vorgesehen sind. Zwischen Getränkekanal und Auslasskanalende besteht bevorzugt eine direkte, seitlich in den Auslasskanal mündende Öffnung, um ein selbsttätiges Leerlaufen des Getränkekanals über den Auslasskanal zu ermöglichen.

Im Hinblick auf die konkrete Ausgestaltung von Arretiermitteln zum lösbaren Fixieren der Öffnungsmittel an dem Auslassbauteil zur Gewährleistung einer gemeinsamen Entnahmemöglichkeit von Auslassbauteil und Öffnungsmittel gibt es unterschiedliche Möglichkeiten. So ist es auch hier möglich, die Arretiermittel als Bajonett- oder Gewindeverbindung auszugestalten. Besonders bevorzugt ist eine Ausführungsvariante, bei der die Arretiermittel einen Radialfortsatz an den Öffnungsmitteln umfassen, insbesondere in Form eines Umfangsbundes, der noch weiter bevorzugt in axialer Richtung mindestens eine Durchgangsöffnung aufweist, wobei sich die Öffnungsmittel über den Radialfortsatz auf einer Auflagefläche des Auslasskanalbauteils abstützen und mit Axialabstand beabstandet zu der Auflagefläche an dem Auslassbauteil, insbesondere mittels eines Sicherungsrings gesichert sind. Als besonders vorteilhaft hat es sich dabei erwiesen, radial zwischen den bevorzugt als Aufstechmittel, insbesondere als Aufstechnadel ausgebildeten Öffnungsmitteln und dem Innenumfang einer die Öffnungsmittel aufnehmenden Öffnung des Auslassbauteils eine elastomere Ringdichtung, insbesondere in Form eines O-Rings anzuordnen.

Um das Auslassbauteil einfach manuell mithilfe der Fixiermittel fixieren und wieder lösen zu können, ist erfindungsgemäß vorgesehen, dass das Auslassbauteil Griffmittel aufweist, die sich zu zwei einander gegenüberliegenden Radialseiten des Auslassbauteils bezogen auf eine Drehachse der Fixiermittel erstrecken, um die Griffmittel zwischen Daumen und Zeigefinger greifen und dann um die diese Drehachse verdrehen zu können. Erfindungsgemäß ist eine Ausführungsvariante, bei der die Griffmittel auf einer der Axialseiten von dem Auslasskanal gebildet sind oder diesen umfassen und auf der gegenüberliegenden Radialseite als Axialfortsatz. Die Griffmittel befinden sich bevorzugt unabhängig von deren konkreter Ausgestaltung außerhalb der Injektionskammer und noch weiter bevorzugt außerhalb des Injektionskammergehäuses und erstrecken sich axial entlang der vorerwähnten Drehachse der Fixiermittel von der Injektionskammer weg.

Die Erfindung führt auch auf ein Verfahren zum Betreiben einer nach dem Konzept der Erfindung ausgebildeten Getränkezubereitungsvorrichtung. Dieses Betriebsverfahren umfasst die Schritte des Lösens der Fixiermittel und Abnehmen des Auslassbauteils von dem Injektionskammergehäuse und/oder einem injektionskammergehäusefesten Bauteil sowie des lösbaren Festlegens des Auslassbauteils relativ zu dem Gehäuse der Injektionskammer mittels der Fixiermittel derart, dass ein Getränk durch den Auslasskanal des Auslassbauteils aus der Injektionskammer herausströmen kann, wobei bevorzugt der Auslasskanal vor dem (insbesondere erneuten) Festlegen des Auslassbauteils gereinigt wird.

Besonders bevorzugt wird das Auslassbauteil, insbesondere von außen her derart an dem Injektionskammergehäuse und/oder einem injektionskammergehäusefesten Bauteil festgelegt, dass eine dem Auslassbauteil zugeordnete Dichtung axial und/oder radial zwischen dem Auslassbauteil und dem Injektionskammergehäuse oder dem injektionskammergehäusefesten Bauteil gepresst wird.

Besonders zweckmäßig ist es, wenn durch das Abnehmen des Auslassbauteils eine, bevorzugt umfangsgeschlossene Injektionskammergehäuseöffnung, die im festgelegten Zustand des Auslassbauteils fluidleitend mit dem Auslass kommuniziert, geöffnet wird.

Besonders bevorzugt ist es, wenn nach dem Festlegen des Auslassbauteils eine Getränkesubstratverpackung, insbesondere eine Substratkapsel, beispielsweise eine Kaffeekapsel, eine Teekapsel oder eine Kaltgetränkesubstratkapsel in das Injektionskammergehäuse eingebracht und relativ zu dem Auslassbauteil positioniert wird, woraufhin in die Getränkesubstratverpackung mittels der Fördermittel der Getränkezubereitungsvorrichtung eine Flüssigkeit, insbesondere Wasser, bevorzugt mit integralen Heizmitteln erhitztes oder bevorzugt mittels integralen Kühlmitteln gekühltes Wasser injiziert und ein auf diese Weise erhaltenes Getränk, insbesondere ein Kaltgetränk mit einer Temperatur von weniger als 20°C, noch weiter bevorzugt weniger als 10°C, oder alternativ ein Heißgetränk oder ein Umgebungstemperaturgetränk durch den Auslass aus der Injektionskammer ausgeleitet wird.

Weitere Vorteile, Merkmale und Einzelheiten der Erfindung ergeben sich aus der nachfolgenden Beschreibung bevorzugter Ausführungsbeispiele sowie anhand der Zeichnungen.

Diese zeigen in:
- Fig. 1:: in einer stark schematisierten Darstellung einen möglichen Grundaufbau einer als Kapselmaschine ausgebildeten Getränkezubereitungsvorrichtung,
- Fig. 2a bis 2d:: eine erste, nach dem Konzept der Erfindung ausgebildete Ausgestaltungsvariante von Injektionskammer und Auslassbauteil, wobei hier Öffnungsmittel lösbar am Auslassbau festgelegt sind, und
- Fig. 3a bis 3d:: eine alternative Variante mit dauerhaft fest (d.h. nicht zerstörungsfrei lösbar) an dem Auslassbauteil festgelegten oder einteilig mit diesen ausgebildeten Öffnungsmitteln.

In den Figuren sind gleiche Elemente und Elemente mit der gleichen Funktion mit den gleichen Bezugszeichen gekennzeichnet.

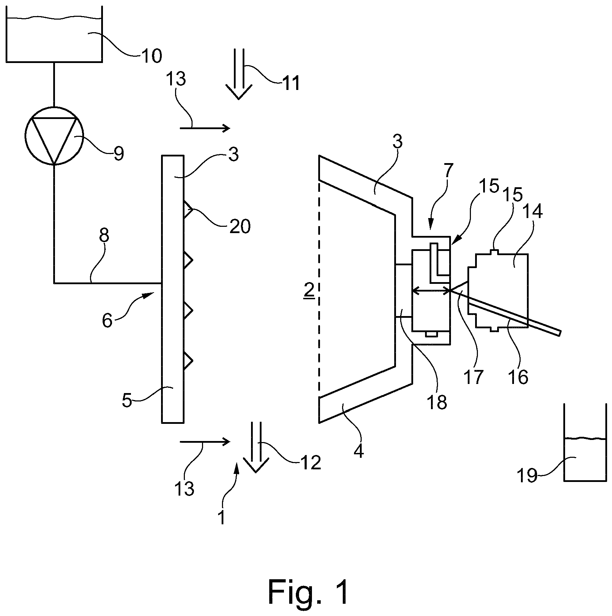

In Fig. 1 ist eine mögliche Ausgestaltung einer erfindungsgemäßen Getränkezubereitungsvorrichtung 1 gezeigt. Diese umfasst ein nicht dargestelltes Getränkezubereitungsvorrichtungsgehäuse, in welchem eine Injektionskammer 2 ausgebildet ist, die von einem, hier zweiteiligen Injektionskammergehäuse 3 begrenzbar ist. Das Injektionskammergehäuse 3 besteht aus einem stationären Gehäuseteil 4 und einem translatorisch und einem relativ hierzu manuell oder mittels eines elektromotorischen Antriebs verstellbaren mobilen Gehäuseteil 5. Die, hier lediglich beispielhaft translatorische Verstellbarkeit (alternative Verstellwege, beispielsweise ein Verschwenken sind alternativ realisierbar) wird über die Pfeile 13 angedeutet.

Hier ist beispielsweise das stationäre Gehäuseteil 4 wannenartig ausgebildet - zusätzlich oder alternativ ist es auch denkbar das mobile bzw. verstellbare Gehäuseteil 5 wannenartig auszugestalten.

Die Injektionskammer 3 umfasst eine Einlassseite 6 sowie eine gegenüberliegende Auslassseite 7. In die Einlassseite 6 mündet eine Flüssigkeitsleitung, insbesondere eine Wasserleitung, durch die der Injektionskammer 2 mithilfe von eine Pumpe umfassenden Fördermitteln 9 eine Flüssigkeit 10, beispielsweise aus einem Flüssigkeitsvorratstank oder einem Frischwasseranschluss zugeführt werden kann, um eine nicht dargestellte, in der Injektionskammer 2 aufgenommene Getränkesubstratverpackung, insbesondere eine Substratkapsel zu durchströmen.

Die Getränkesubstratverpackung wird über eine Zuführung 11 manuell oder automatisch zugeführt und kann durch eine Auswurföffnung 12 nach erfolgter Getränkeherstellung die Injektionskammer 2 wieder verlassen.

Im Bereich der Auslassseite 7, hier stirnseitig an dem stationären, bevorzugt wannenartigen Gehäuseteil 4 ist ein Auslassbauteil 14 mithilfe von, hier beispielhaft als Bajonettverschluss ausgebildeten Fixiermitteln 15 von außen lösbar festlegbar. Das lediglich stark schematisiert dargestellte Auslassbauteil 14 umfasst einen Auslasskanal 16, der im montierten Zustand des Auslassbauteils 14 die Injektionskammer 2 mit der Umgebung verbindet. Ferner umfasst das Auslassbauteil 14 hier als Einstechnadel (Dorn) ausgebildete Öffnungsmittel 17 zum auslassseitigen Öffnen einer in der Injektionskammer 2 aufgenommenen Getränkesubstratverpackung bzw. zur Ausbildung einer Auslassöffnung in der Getränkesubstratverpackung, aus der dann ein durch Injektion von Flüssigkeit hergestelltes Getränk in die Injektionskammer 2 und aus dieser in den Auslasskanal 16 strömen bzw. über letzteren die Injektionskammer 2 verlassen kann. Zu erkennen ist in Fig. 1 weiterhin, dass im Bereich der Einlassseite 6 einlassseitige Öffnungsmittel 20, hier beispielhaft am mobilen Gehäuseteil 5 vorgesehen sind, um die Getränkesubstratverpackung einlassseitig zu öffnen bzw. mindestens eine Öffnung herzustellen, durch die die über die Fördermittel 9 zugeführte Flüssigkeit in die Getränkesubstratverpackung einströmen.

Zu erkennen ist, dass dem Auslassbauteil 14 eine Gehäuseöffnung 18 zugeordnet ist, die im montierten Zustand von den Öffnungsmitteln 17 in die Injektionskammer 2 hinein durchsetzt wird.

In Fig. 1 ist ein Getränkebehältnis 19 gezeigt, in das hinein ein Getränk aus dem Auslass 16 strömen kann. Alternativ ist es grundsätzlich denkbar, dass das Getränk vor dem Einleiten in ein Getränkebehältnis 19 in der Getränkezubereitungsvorrichtung 1 noch weiter verarbeitet wird.

Im Folgenden werden mögliche alternative Ausgestaltungsvarianten von Auslassbauteilen 14 in Kombination mit dem stationären Gehäuseteil 4 des Injektionskammergehäuses 3 erläutert, die das in Fig. 1 gezeigte stationäre Gehäuseteil 4 sowie das in Fig. 1 gezeigte Auslassbauteil 14 ersetzen können.

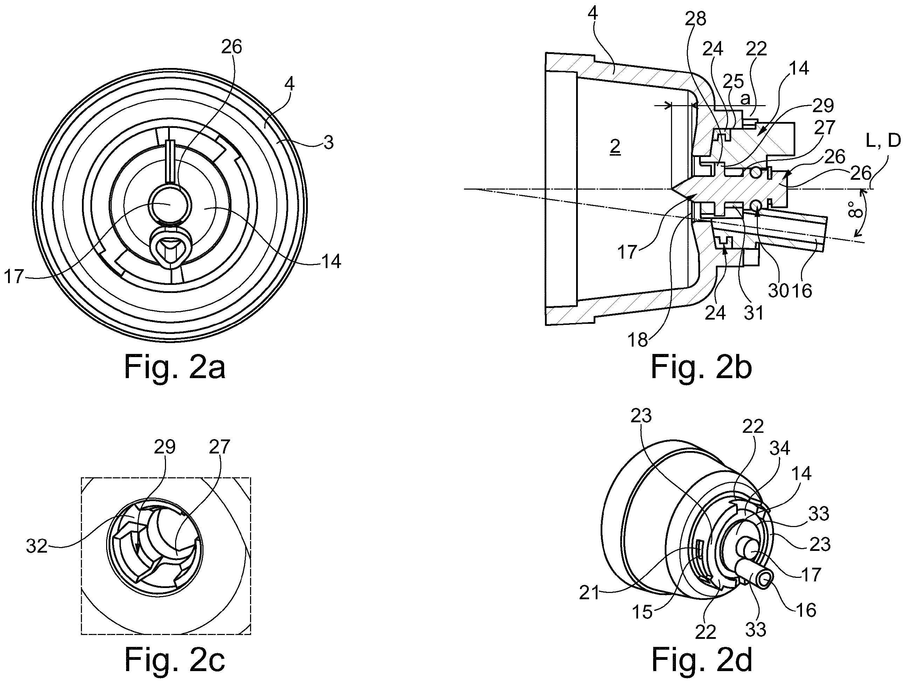

In den Fig. 2a bis 2d ist ein Injektionskammergehäuse 3, genauer ein stationäres Gehäuseteil 4 gezeigt, welches zur Aufnahme einer als Getränkekapsel ausgebildeten Getränkesubstratverpackung wannenförmig ausgestaltet ist. Zum Schließen der Injektionskammer 2 kann, wie anhand von Fig. 1 erläutert, ein mobiles Gehäuseteil zusammenwirken.

Stirnseitig an dem stationären Gehäuseteil 4 ist ein Auslassbauteil 14 mithilfe von Fixiermitteln 15 lösbar formschlüssig festgelegt. Bei dem Auslassbauteil 14 handelt es sich um ein Kunststoffspritzgussteil, in das ein Auslasskanal 16 eingeformt ist, der die von dem Gehäuse 3 außen begrenzte Injektionskammer 2 im montierten Zustand mit der Umgebung getränkeleitend verbindet. Zu erkennen ist, dass sich in dem gezeigten Ausführungsbeispiel der Auslasskanal 16 unter einem Winkel von 8° zu einer Längsmittelachse L des Gehäuseteils 4 erstreckt, die zusammenfällt mit einer später noch zu erläuternden Drehachse D der Fixiermittel 15.

Die Fixiermittel 15 sind in der Art eines Bajonettverschlusses ausgebildet, so dass das Auslassbauteil 14 in einer kombinierten Dreh-Steckbewegung von außen her an dem Injektionskammergehäuse 3 festlegbar ist, wozu das Auslassbauteil 14 zunächst entlang der Längsachse L bzw. Drehachse D in Richtung Injektionskammer 2 bewegt wird und dabei die als Bajonettverschlusselemente, hier Radialfortsätze, ausgebildeten ersten Fixierelemente 21 der Fixiermittel 15 in axiale Aussparungen 22 des Gehäuseteils 4 eingeführt werden, woraufhin das Auslassbauteil 14 um die Drehachse D rotiert wird und somit die ersten Fixierelemente in Umfangsrichtung verdreht werden und somit als Gegenbajonettelemente, hier Radialfortsätze 21 ausgebildete zweite Fixierelemente 23 axial hintergreifen.

Zum Lösen der Verbindung muss das Auslassbauteil 14 in entgegengesetzt Richtung um die Drehachse D rotiert und dann axial entgegen der Einsteckrichtung entlang der Drehachse D, quasi nach hinten bzw. von der Injektionskammer 2 weg, d.h. nach außen entnommen werden.

Die Fixiermittel 15 sind derart ausgebildet, dass die ersten und zweiten Fixierelemente 21, 23 über mindestens eine Schrägfläche derart zusammenwirken, dass aus der Drehbewegung eine Axialbewegung des Auslassbauteils 14 in Richtung Injektionskammer 2 resultiert, wodurch eine, beispielhaft an dem Auslassbauteil 14 festgelegte, als Elastomerringdichtung ausgebildete Dichtung 24 gepresst wird. Die Dichtung 24 wird axial von außen gegen das stationäre Gehäuseteil 4 kraftbeaufschlagt und dadurch in axialer Richtung gepresst - aus dieser axialen Verpressung erfolgt gleichzeitig eine radiale Verpressung gegen den Innenumfang 25 einer hier gestuft ausgebildeten stirnseitigen Gehäuseöffnung 18 im Gehäuseteil 4.

Hier beispielhaft zentrisch innerhalb einer Durchgangsöffnung 27 des Auslassbauteils 14 sind als Aufstechnadel ausgebildete Öffnungsmittel 17 lösbar festgelegt mithilfe von Arretiermitteln 26. Die Arretiermittel 26 umfassen einen als Umfangsbund ausgebildeten Radialfortsatz 28 der Öffnungsmittel 17, wobei der Radialfortsatz 28 sich axial abstützt an einer Auflagefläche 29 (Ringschulter) des Auslassbauteils 14. Axial beabstandet hierzu, in einem Bereich außerhalb des Auslassbauteils 14 befindet sich ein sicherer Heizring- bzw. Sperrring der Arretiermittel 26, der in einer Umfangsnut der Öffnungsmittel 17 gehalten ist und der die Öffnungsmittel 17 axial sichert. Zur Abdichtung der Öffnungsmittel 17 gegenüber dem Innenumfang der Durchgangsöffnung 27 ist eine als O-Ring ausgebildete Ringdichtung vorgesehen, radial zwischen dem Innenumfang der Durchgangsöffnung 27 und dem Außenumfang der Öffnungsmittel 17. Die Ringdichtung 30 befindet sich in einer Umfangsnut der Öffnungsmittel 17.

Aus Fig. 2b ist zu erkennen, dass die Öffnungsmittel 17 die Gehäuseöffnung 18 nach innen um das Maß a von bevorzugt mehreren Millimetern überragen, um somit eine Auslassöffnung in eine Getränkesubstratverpackung einbringen zu können.

Aus Fig. 2b ergibt sich weiterhin, dass in einem Bereich radial zwischen den Öffnungsmitteln 17, genauer der Aufstechnadel und dem Innenumfang der Durchgangsöffnung 27, welche alternativ beispielsweise auch als Sacklochöffnung ausgebildet sein kann ein Getränkekanal 31 gebildet ist, aus dem ein Getränk seitlich in den Auslasskanal 16 strömen kann. Hierdurch können aus einer axial von dem Radialfortsatz 28 begrenzten und getränkeleitend mit der Injektionskammer 2 verbundenen Kammer 32 Getränkereste abfließen.

Aus einer Zusammenschau der Fig. 2a, 2b und 2d ist zu erkennen, dass das Auslassbauteil 14 Griffmittel 33 umfasst, die auf zwei einander gegenüberliegenden Radialseiten der Drehachse D angeordnet sind. Ein Griffabschnitt dieser Griffmittel 33 wird von dem Auslasskanal 16 gebildet, während ein radial gegenüberliegender Griffabschnitt von einem blättchenförmigen Axialfortsatz 34 gebildet wird. Die Griffmittel 33 sind so ausgestaltet, dass sie zwischen Daumen und Zeigefinger aufgenommen werden können, um ein Drehmoment zum Festlegen oder Lösen der Fixiermittel 15 in das Auslassbauteil 14 einzubringen.

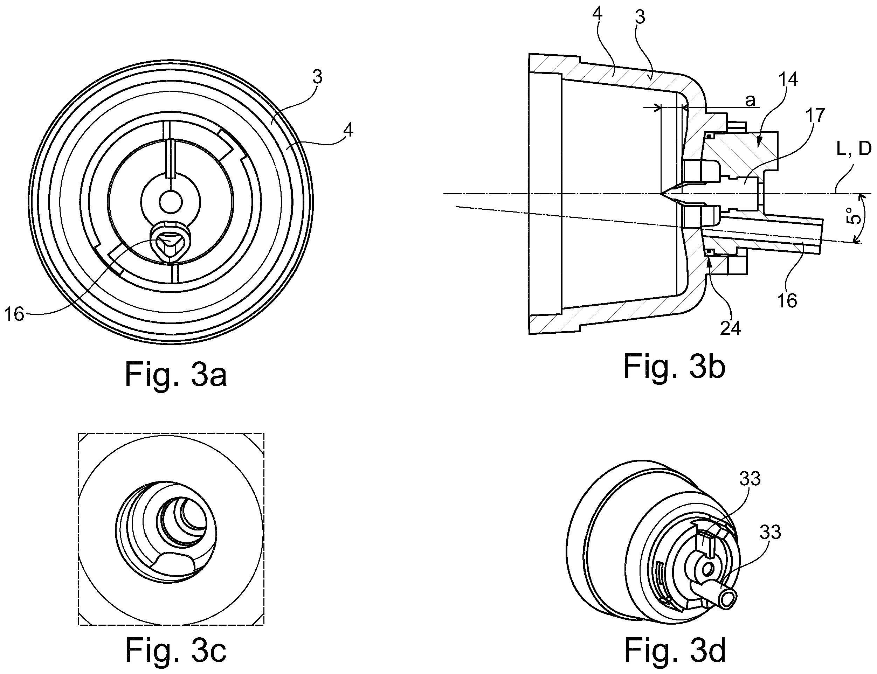

Im Folgenden wird das Ausführungsbeispiel gemäß den Fig. 3 bis 3d erläutert, wobei zur Vermeidung von Wiederholungen im Wesentlichen nur auf die Unterschiede zu dem voranstehenden Ausführungsbeispiel eingegangen wird. Im Hinblick auf die Gemeinsamkeiten wird auf das vorhergehende Ausführungsbeispiel verwiesen.

Im Gegensatz zu dem Ausführungsbeispiel gemäß den Fig. 2a bis 2d sind bei dem Ausführungsbeispiel gemäß den Fig. 3a bis 3d die Öffnungsmittel 17 dauerhaft fest, nicht zerstörungsfrei lösbar mit dem Auslassbauteil 14, beispielsweise durch Umspritzen verbunden. Alternativ ist eine einteilige Ausführungsform möglich.

Zu erkennen ist, dass aufgrund der einfacheren Gestaltung der Auslasskanal 16 zu der Drehachse D bzw. der Längsmittelachs L nur noch einen Winkel von 5° aufgespannt.

Auch bei dem Ausführungsbeispiel gemäß Fig. 3a bis 3d ist das Auslassbauteil 14 über als Bajonettverschlussmittel ausgebildete Fixiermittel 17 lösbar durch unmittelbare Wechselwirkung formschlüssig mit dem stationären Gehäuseteil 4 verbindbar, wobei es grundsätzlich auch denkbar ist eine lösbare Verbindung an einem mobilen, d.h. relativ zu einem stationären Gehäuseteil verstellbaren Gehäuseteil des Injektionskammergehäuses 3 zu realisieren.

### Bezugszeichen

- 1: Getränkezubereitungsvorrichtung
- 2: Injektionskammer
- 3: Injektionskammergehäuse (Gehäuse)
- 4: stationäres Gehäuseteil
- 5: mobiles (verstellbares) Gehäuseteil
- 6: Einlassende
- 7: Auslassseite
- 8: Flüssigkeitsleitung
- 9: Fördermittel
- 10: Flüssigkeitstank
- 11: Zuführung (Zuführöffnung)
- 12: Auslassöffnung
- 13: Pfeile (symbolisieren Verstellbarkeit des Gehäuseteils 5)
- 14: Auslassbauteil
- 15: Fixiermittel
- 16: Auslasskanal
- 17: Öffnungsmittel
- 18: Gehäuseöffnung
- 19: Getränkebehältnis
- 20: einlassseitige Öffnungmittel
- 21: erste Fixierelemente
- 22: Aussparungen
- 23: zweite Fixierelemente
- 24: Dichtung
- 25: Innenumfang
- 26: Arretiermittel
- 27: Durchgangsöffnung
- 28: Radialfortsatz
- 29: Auflagefläche
- 30: Ringdichtung
- 31: Getränkekanal
- 32: Kammer
- 33: Griffmittel
- 34: Axialfortsatz

- a: Überstandsmaß

- D: Drehachse der Fixiermittel
- L: Längsmittelachse

## Patentansprüche

1. Getränkezubereitungsvorrichtung (1) zum Zubereiten von Getränken, insbesondere Kaltgetränken, mittels Getränkesubstratverpackungen, bevorzugt Substratkapseln, umfassend eine Injektionskammer (2) zum Injizieren einer Flüssigkeit, insbesondere Wasser, in eine in der Injektionskammer (2) befindliche Getränkesubstratverpackung, weiter umfassend Fördermittel (9) zum Fördern der Flüssigkeit zu der Injektionskammer (2), wobei die Injektionskammer (2) von einem, insbesondere mehrteiligen, Gehäuse begrenzt ist und ein durch Injizieren der Flüssigkeit in die Getränkesubstratverpackung erhaltenes und durch eine Getränkesubstratverpackungsöffnung in die Injektionskammer (2) ausströmendes Getränk durch einen Auslasskanal (16) aus der Injektionskammer (2) ausleitbar ist,
wobei der Auslasskanal (16), zumindest abschnittsweise, bevorzugt vollständig, an einem Auslassbauteil (14) der Getränkezubereitungsvorrichtung (1) ausgebildet ist, welches mittels Fixiermitteln (15) der Getränkezubereitungsvorrichtung (1) lösbar ortfest relativ zu dem Gehäuse der Injektionskammer (2) fixierbar ist, und wobei die Fixiermittel (15) derart ausgebildet sind, dass das Auslassbauteil (14) durch eine Fixier-Drehbewegung des Auslassbauteils (14) um eine Drehachse (D), bevorzugt nach einer vorhergehenden translatorischen Steckbewegung entlang der Drehachse (D), translatorisch entlang der Drehachse (D) in Richtung Injektionskammer (2) verstellbar ist,
und wobei
die Fixiermittel (15) sich axial von der Injektionskammer (2) weg sowie in radialer Richtung bezogen auf eine Drehachse (D) der Fixiermittel (15) erstreckende Griffmittel (33) aufweisen, auf zwei einander gegenüberliegenden Seiten einer Drehachse (D), wobei ein Griffabschnitt dieser Griffmittel (33) von dem Auslasskanal (16) gebildet ist während ein radial gegenüberliegender Griffabschnitt von einem blättchenförmigen Axialfortsatz (34) gebildet ist, wobei die Griffmittel (33) so ausgestaltet sind, dass sie zwischen Daumen und Zeigefinger aufnehmbar sind, um ein Drehmoment zum Festlegen oder Lösen der Fixiermittel (15) in das Auslassbauteil (14) einzubringen.

2. Getränkezubereitungsvorrichtung nach Anspruch 1,
**dadurch gekennzeichnet,**
**dass** das Auslassbauteil (14) mittels der Fixiermittel (15) durch unmittelbare Wechselwirkung mit dem Gehäuse (3) der Injektionskammer (2), insbesondere stirnseitig mit einem wannenförmigen, bevorzugt stationärem, Gehäuseteil (4) oder einem gehäusefesten, von dem Gehäuse (3) der Injektionskammer (2) separaten Bauteil an dem Gehäuse (3) der Injektionskammer (2) fixierbar ist.

3. Getränkezubereitungsvorrichtung nach einem der Ansprüche 1 oder 2,
**dadurch gekennzeichnet,**
**dass** die Fixiermittel (15) mehrteilig ausgebildet sind und ein auslassbauteilseitiges, insbesondere fest mit dem Auslassbauteil (14) verbunden oder einteilig mit dem Auslassbauteil (14) ausgebildetes erstes Fixierelement (21), insbesondere ein Bajonett- oder Gewindeelement sowie ein zweites, insbesondere injektionskammergehäuseseitiges zweites Fixierelement (23), insbesondere ein Gegenbajonettelement oder ein Gegengewindeelement, zur, insbesondere formschlüssigen, Wechselwirkung mit dem ersten Fixierelement (21), aufweisen.

4. Getränkezubereitungsvorrichtung nach einem der vorhergehenden Ansprüche,
**dadurch gekennzeichnet,**
**dass** das Auslassbauteil (14) mit den Fixiermitteln (15) in und/oder außerhalb einer, insbesondere umfangsgeschlossenen, Gehäuseöffnung (18) des Injektionskammergehäuses (3) lösbar fixierbar ist, deren freie Querschnittsfläche bevorzugt größer ist als eine freie Querschnittsfläche des Auslasskanals (16).

5. Getränkezubereitungsvorrichtung nach einem der vorhergehenden Ansprüche,
**dadurch gekennzeichnet,**
**dass** zwischen dem Auslassbauteil (14) und dem Injektionskammergehäuse (3) oder einem injektionskammergehäusefesten Bauteil eine, bevorzugt am Auslassbauteil (14) festgelegte, Dichtung (24), insbesondere eine Elastomerdichtung derart angeordnet ist, dass diese durch das Fixieren des Auslassbauteils (14) axial und/oder radial pressbar ist, insbesondere zwischen dem Auslassbauteil (14) und dem Injektionskammergehäuse (3).

6. Getränkezubereitungsvorrichtung nach einem der vorhergehenden Ansprüche,
**dadurch gekennzeichnet,**
**dass** der Injektionskammer (2) Öffnungsmittl (17) der Getränkezubereitungsvorrichtung (1), insbesondere Aufstechmittel, zum auslassseitigen Öffnen, insbesondere Aufstechen, der Getränkesubstratverpackung zugeordnet sind.

7. Getränkezubereitungsvorrichtung nach Anspruch 6,
**dadurch gekennzeichnet,**
**dass** die Öffnungsmittel (17) an dem Auslassbauteil (14) angeordnet sind, insbesondere über Arretiermittel (26), bevorzugt unter dazwischen Anordnung einer Dichtung (24) lösbar mit dem Auslassbauteil (14) verbunden, oder unverlierbar, bevorzugt durch Umspritzen an dem Auslassbauteil (14) festgelegt, oder einteilig mit diesem ausgebildet sind.

8. Getränkezubereitungsvorrichtung nach einem der Ansprüche 6 oder 7,
**dadurch gekennzeichnet,**
**dass** zwischen einem Außenumfang der Öffnungsmittel (17) und dem Auslassbauteil (14) mindestens ein Getränkekanal (31) ausgebildet ist, aus dem das Getränk seitlich, insbesondere mit Abstand zu einem injektionskammerseitgen Auslasskanalende (7) und einem davon abgewandten äußeren Auslasskanalende in den Auslasskanal (14) strömen kann.

9. Getränkezubereitungsvorrichtung nach einem der Ansprüche 7 oder 8,
**dadurch gekennzeichnet,**
**dass** sich die Öffnungsmittel (17) mit einem Radialfortsatz (28), insbesondere einem Umfangsbund, an einer Auflagefläche des Auslassbauteils (14) abstützen und beabstandet zu der Auflagefläche am Auslassbauteil (14), insbesondere mittels eines Sicherungsrings gesichert sind.

10. Verfahren zum Betreiben einer Getränkezubereitungsvorrichtung (1) nach einem der vorhergehenden Ansprüche, **gekennzeichnet durch** die Schritte:
- Lösen der Fixiermittel (15) und Abnehmen des Auslassbauteils (14) von dem Injektionskammergehäuse (3) und/oder eines injektionskammergehäusefesten Bauteils,
- Lösbares Festlegen des Auslassbauteils (14) relativ zu dem Gehäuse (3) der Injektionskammer (2) mittels der Fixiermittel (15), insbesondere nach einer vorhergehenden Reinigung des Auslasskanals (16) derart, dass ein Getränk durch den Auslasskanal (16) des Auslassbauteils (14) aus der Injektionskammer (2) herausströmen kann.

11. Verfahren nach Anspruch 10,
**dadurch gekennzeichnet,**
**dass** beim Festlegen des Auslassbauteils (14) eine dem Auslassbauteil (14) zugeordnete Dichtung (24) axial und/oder radial gepresst wird.

12. Verfahren nach einem der Ansprüche 10 oder 11,
**dadurch gekennzeichnet,**
**dass** durch Abnehmen des Auslassbauteils (14) eine, bevorzugt umfangsgeschlossene, Injektionskammergehäuseöffnung (3), die im festgelegten Zustand des Auslassbauteils (14) fluidleitend mit dem Auslasskanal (16) kommuniziert, geöffnet wird.

13. Verfahren nach einem der Ansprüche 10 bis 12,
**dadurch gekennzeichnet,**
**dass** nach dem Festlegen des Auslassbauteils (14) eine Getränkesubstratverpackung in das Injektionskammergehäuse (3) eingebracht und relativ zu dem Auslassbauteil (14) der Gehäusezubereitungsvorrichtung (1) positioniert wird, worauf hin in Getränkesubstratverpackung mittels der Fördermittel (9) der Getränkezubereitungsvorrichtung (1) eine Flüssigkeit, insbesondere Wasser, injiziert und ein so erhaltenes Getränk, insbesondere ein Kaltgetränk mit einer Temperatur von weniger als 20°C, noch weiter bevorzugt von weniger als 10°C, durch den Auslasskanal (14) aus der Injektionskammer (2) ausgeleitet wird.

## Claims

1. A beverage preparation device (1) for preparing beverages, in particular cold beverages, by means of beverage substrate packages, preferably substrate capsules, the beverage preparation device (1) comprising an injection chamber (2) for injecting a liquid, in particular water, into a beverage substrate package located in the injection chamber (2), the beverage preparation device (1) further comprising pumping means (9) for pumping the liquid to the injection chamber (2), the injection chamber (2) being defined by a housing, in particular a multi-part housing, and a beverage obtained by injecting the liquid into the beverage substrate package and flowing out into the injection chamber (2) through a beverage substrate package opening being dischargeable from the injection chamber (2) through an outlet channel (16),
the outlet channel (16) being formed, at least partially, preferably entirely, on an outlet component (14) of the beverage preparation device (1), the outlet component (14) being detachably fixable in place relative to the housing of the injection chamber (2) by means of fixing means (15) of the beverage preparation device (1), and
the fixing means (15) being configured in such a manner that the outlet component (14) is translationally displaceable in the direction of the injection chamber (2) along an axis of rotation (D) by a fixing rotation of the outlet component (14) about the axis of rotation (D), preferably after a preceding translational plugging movement along the axis of rotation (D), and
the fixing means (15) having handle means (33) on opposite sides of the axis of rotation (D) of the fixing means (15), the handle means (33) extending axially away from the injection chamber (2) and in the radial direction with respect to the axis of rotation (D), a handle portion of said handle means (33) being formed by the outlet channel (16), whereas a radially opposite handle portion is formed by a platelet-shaped axial protrusion (34), the handle means (33) being configured in such a manner that they can be held between thumb and forefinger in order to introduce a torque for fixing or detaching the fixing means (15) into the outlet component (14).

2. The beverage preparation device according to claim 1,
**characterized in that**
the outlet component (14) is fixable to the housing (3) of the injection chamber (2) by means of the fixing means (15) through direct interaction with the housing (3) of the injection chamber (2), in particular at the front with a tray-shaped, preferably stationary housing part (4) or with a component separate from the housing (3) of the injection chamber (2) and attached to the housing.

3. The beverage preparation device according to any one of claims 1 or 2,
**characterized in that**
the fixing means (15) are composed of multiple parts and have a first fixing element (21), in particular a bayonet element or thread element, disposed on the outlet component (14), in particular permanently connected to the outlet component (14) or integral to the outlet component (14), and a second fixing element (23), in particular disposed on the housing (3) of the injection chamber (2), in particular a mating bayonet element or a mating thread element, for interaction, in particular form-fitting interaction, with the first fixing element (21).

4. The beverage preparation device according to any one of the preceding claims,
**characterized in that**
by means of the fixing means (15), the outlet component (14) is detachably fixable in and/or outside a housing opening (18) of the injection chamber housing (3), the circumference of the housing opening (18) in particular being closed and the free cross-sectional area of the housing opening (18) preferably being greater than a free cross-sectional area of the outlet channel (16).

5. The beverage preparation device according to any one of the preceding claims,
**characterized in that**
between the outlet component (14) and the injection chamber housing (3) or a component attached to the injection chamber housing (3), a seal (24), in particular an elastomeric seal, which is preferably fixed to the outlet component (14), is disposed in such a manner that it can be axially and/or radially compressed, in particular between the outlet component (14) and the injection chamber housing (3), by fixation of the outlet component (14).

6. The beverage preparation device according to any one of the preceding claims,
**characterized in that**
opening means (17) of the beverage preparation device (1), in particular puncturing means, for opening, in particular puncturing, the beverage substrate package at the side facing the outlet are assigned to the injection chamber (2).

7. The beverage preparation device according to claim 6,
**characterized in that**
the opening means (17) are disposed on the outlet component (14), in particular detachably connected to the outlet component (14) via locking means (26), a seal (24) preferably being disposed in-between, or fixed undetachably, preferably by overmolding, to the outlet component (14) or formed integrally with the outlet component (14).

8. The beverage preparation device according to any one of claims 6 or 7,
**characterized in that**
at least one beverage channel (31) is formed between an outer circumference of the opening means (17) and the outlet component (14), the beverage being able to laterally flow from said beverage channel (31), in particular at a distance from an outlet channel end (7) disposed on the injection chamber (2) and an outer outlet channel end facing away therefrom, into the outlet channel (14).

9. The beverage preparation device according to any one of claims 7 or 8,
**characterized in that**
the opening means (17) have a radial protrusion (28), in particular a circumferential collar, supported on a contact surface of the outlet component (14) and are secured to the outlet component (14) at a distance from the contact surface, in particular by means of a securing ring.

10. A method for operating a beverage preparation device (1) according to any one of the preceding claims, **characterized by** the steps of:
- detaching the fixing means (15) and removing the outlet component (14) from the injection chamber housing (3) and/or a component attached to the injection chamber housing (3),
- detachably fixing the outlet component (14) relative to the housing (3) of the injection chamber (2) by means of the fixing means (15), in particular after prior cleaning of the outlet channel (16), in such a manner that a beverage can flow out of the injection chamber (2) through the outlet channel (16) of the outlet component (14).

11. The method according to claim 10,
**characterized in that**
a seal (24) assigned to the outlet component (14) is axially and/or radially compressed when the outlet component (14) is being fixed.

12. The method according to any one of claims 10 or 11,
**characterized in that**
by removing the outlet component (14), an injection chamber housing opening (3), whose circumference is preferably closed and which is in fluid communication with the outlet channel (16) when in the fixed state, is opened.

13. The method according to any one of claims 10 to 12,
**characterized in that**
after fixing of the outlet component (14), a beverage substrate package is introduced into the injection chamber housing (3) and is positioned relative to the outlet component (14) of the beverage preparation device (1), whereupon a liquid, in particular water, is injected into the beverage substrate package by means of the pumping means (9) of the beverage preparation device (1), and a beverage thus obtained, in particular a cold beverage having a temperature of less than 20 °C, more preferably of less than 10 °C, is discharged from the injection chamber (2) through the outlet channel (14).

## Revendications

1. Dispositif de préparation de boissons (1) destiné à préparer des boissons, notamment des boissons froides, au moyen d'emballages de substrat de boisson, de préférence des capsules de substrat, le dispositif de préparation de boissons (1) comprenant une chambre d'injection (2) pour l'injection d'un liquide, notamment de l'eau, dans un emballage de substrat de boisson situé dans la chambre d'injection (2), le dispositif de préparation de boissons (1) comprenant en outre des moyens d'alimentation (9) destinés à alimenter la chambre d'injection (2) en liquide, la chambre d'injection (2) étant définie par un boîtier, notamment un boîtier en plusieurs parties, et une boisson qui est obtenue en injectant le liquide dans l'emballage de substrat de boisson et qui sort dans la chambre d'injection (2) par une ouverture de l'emballage de substrat de boisson étant éjectable de la chambre d'injection (2) par un canal de sortie (16),
le canal de sortie (16) étant formé, au moins en partie, de préférence entièrement, sur un composant de sortie (14) du dispositif de préparation de boissons (1), le composant de sortie (14) étant fixable de manière détachable et fixe par rapport au boîtier de la chambre d'injection (2) par des moyens de fixation (15) du dispositif de préparation de boissons (1), et
les moyens de fixation (15) étant configurés de telle manière que le composant de sortie (14) est déplaçable en translation dans la direction de la chambre d'injection (2) le long d'un axe de rotation (D) par une rotation de fixation du composant de sortie (14) autour de l'axe de rotation (D), de préférence après un mouvement d'enfichage précédent le long de l'axe de rotation (D), et
les moyens de fixation (15) ayant des moyens de poignée (33) des côtés opposés de l'axe de rotation (D) des moyens de fixation (15), les moyens de poignée (33) s'étendant radialement à partir de la chambre d'injection (2) et dans la direction radiale par rapport à l'axe de rotation (D), une partie de poignée desdits moyens de poignée (33) étant formée par le canal de sortie (16), tandis qu'une partie de poignée radialement opposée est formée par une saillie (34) axiale en forme de paillette, les moyens de poignée (33) étant configurés de telle manière qu'ils peuvent être tenus entre le pouce et l'index afin d'introduire un couple pour la fixation ou le détachement des moyens de fixation (15) dans le composant de sortie (14).

2. Dispositif de préparation de boissons selon la revendication 1,
**caractérisé en ce que**
le composant de sortie (14) est fixable au boîtier (3) de la chambre d'injection (2) au moyens des moyens de fixation (15) par interaction directe avec le boîtier (3) de la chambre d'injection (2), notamment du côté frontal avec une partie (4) du boîtier en forme de bac, de préférence stationnaire, ou avec un composant séparé du boîtier (3) de la chambre d'injection (2) et solidaire du boîtier.

3. Dispositif de préparation de boissons selon l'une quelconque des revendications 1 ou 2,
**caractérisé en ce que**
les moyens de fixation (15) se composent de plusieurs parties et ont un premier élément de fixation (21), notamment un élément à baïonnette ou un élément fileté, disposé du côté du composant de sortie (14), notamment relié de manière solidaire avec le composant de sortie (14) ou formé d'un seul tenant avec le composant de sortie (14), et un deuxième élément de fixation (23), notamment du côté du boîtier (3) de la chambre d'injection (2), notamment un élément de baïonnette complémentaire ou un élément fileté complémentaire, pour l'interaction, notamment la liaison par forme, avec le premier first élément de fixation (21).

4. Dispositif de préparation de boissons selon l'une quelconque des revendications précédentes,
**caractérisé en ce que**
par les moyens de fixation (15), le composant de sortie (14) est fixable de manière détachable dans et/ou hors d'une ouverture (18) du boîtier (3) de la chambre d'injection (2), la circonférence de l'ouverture (18) étant notamment fermée et la section transversale libre de l'ouverture (18) étant de préférence supérieure à une section transversale libre du canal de sortie (16).

5. Dispositif de préparation de boissons selon l'une quelconque des revendications précédentes,
**caractérisé en ce**
**qu'**entre le composant de sortie (14) et le boîtier (3) de la chambre d'injection ou un composant solidaire du boîtier (3) de la chambre d'injection, un joint (24), notamment un joint élastomère, qui est de préférence fixé au composant de sortie (14), est disposé de telle manière qu'il peut être axialement et/ou radialement comprimé, notamment entre le composant de sortie (14) et le boîtier (3) de la chambre d'injection, par la fixation du composant de sortie (14).

6. Dispositif de préparation de boissons selon l'une quelconque des revendications précédentes,
**caractérisé en ce que**
des moyens d'ouverture (17) du dispositif de préparation de boissons (1), notamment des moyens de perçage, destinés à ouvrir, notamment percer, l'emballage de substrat de boisson du côté de sortie sont assignés à la chambre d'injection (2).

7. Dispositif de préparation de boissons selon la revendication 6,
**caractérisé en ce que**
les moyens d'ouverture (17) sont disposés sur le composant de sortie (14), notamment reliés de manière détachable avec le composant de sortie (14) par des moyens d'arrêt (26), un joint (24) étant de préférence disposé entre eux, ou fixés de manière non détachable, de préférence par surmoulage, au composant de sortie (14) ou formés d'un seul tenant avec le composant de sortie (14).

8. Dispositif de préparation de boissons selon l'une quelconque des revendications 6 ou 7,
**caractérisé en ce**
**qu'**au moins un canal de boisson (31) est formé entre une circonférence extérieure des moyens d'ouverture (17) et le composant de sortie (14), le boisson pouvant couler latéralement à partir du canal de boisson (31), notamment à une distance d'une extrémité (7) du canal de sortie du côté de la chambre d'injection et d'une extrémité extérieure du canal de sortie détournée de celle-ci, dans le canal de sortie (14).

9. Dispositif de préparation de boissons selon l'une quelconque des revendications 7 ou 8,
**caractérisé en ce que**
les moyens d'ouverture (17) ont une saillie radiale (28), notamment un épaulement circonférentiel, supportée sur une surface de contact du composant de sortie (14) et sont arrêtés sur le composant de sortie (14) à une distance de la surface de contact, notamment par un circlip.

10. Procédé de fonctionnement d'un dispositif de préparation de boissons (1) selon l'une quelconque des revendications précédentes, **caractérisé par** les étapes consistant à :
- détacher les moyens de fixation (15) et enlever le composant de sortie (14) du boîtier (3) de la chambre d'injection et/ou d'un composant solidaire du boîtier de la chambre d'injection,
- fixer le composant de sortie (14) de manière détachable par rapport au boîtier (3) de la chambre d'injection (2) par les moyens de fixation (15), notamment après un nettoyage précédent du canal de sortie (16), de telle manière qu'une boisson peut sortir de la chambre d'injection (2) par le canal de sortie (16) du composant de sortie (14).

11. Procédé selon la revendication 10,
**caractérisé en ce**
**qu'**un joint (24) assigné au composant de sortie (14) est axialement et/ou radialement comprimé quand le composant de sortie (14) est fixé.

12. Procédé selon l'une quelconque des revendications 10 ou 11,
**caractérisé en ce**
**qu'**en enlevant le composant de sortie (14), une ouverture (3) du boîtier de la chambre d'injection, dont la circonférence est de préférence fermée et qui est en communication fluidique avec le canal de sortie (16) dans l'état fixé, est ouverte.

13. Procédé selon l'une quelconque des revendications 10 à 12,
**caractérisé en ce**
**qu'**après la fixation du composant de sortie (14), un emballage de substrat de boisson est introduit dans le boîtier (3) de la chambre d'injection et est positionné par rapport au composant de sortie (14) du dispositif de préparation de boissons (1), après quoi un liquide, notamment de l'eau, est injecté dans l'emballage de substrat de boisson par les moyens d'alimentation (9) du dispositif de préparation de boissons (1), et une boisson ainsi obtenue, notamment une boisson froide ayant une température inférieure à 20 °C, de préférence davantage inférieure à 10 °C, est éjectée de la chambre d'injection (2) par le canal de sortie (14).
